# EUROPEAN PATENT APPLICATION

(11) **EP 1 304 030 A2**
(43) Date of publication of application: **23.04.2003**
(21) Application number: 02024122.0
(22) Date of filing: 11.01.1999
(51) Int. Cl.: A01K 45/00

(54) **Automated in ovo injection apparatus**

(30) Priority: 12.01.1998 US 71211 P
(62) Divisional of application: 99904064.5
(71) Applicant: EMBREX INC., Research Triangle Park North Carolina 27709-3989 (US)
(72) Inventor: Williams, Christopher, J., Apex, NC 27502 (US)
(74) Representative: Gilholm, Stephen Philip

(57) **Abstract**

A multi-site in ovo injection apparatus and related methods for treating live eggs is disclosed. The multi-site injection apparatus includes one or more injection delivery devices (25) which are configured to deliver multiple treatment substances to predetermined areas of eggs. The treatment substances can be provided so that they are spatially and/or temporally separate. The devices and methods enable the effective use of a plurality of treatment substances even those that are effective when used alone but can be noxious if mixed.

## Description

### Field of the Invention

The present invention relates to treatment of avian embryos and, more particularly, relates to *in ovo* injection devices and methods for delivering various substances to live embryonated eggs.

### Background of the Invention

Injections of various substances into avian eggs have been employed to decrease post-hatch mortality rates, increase the potential growth rates or eventual size of the resulting chicken, and even to influence the gender determination of the embryo. Similarly, injections of antigens into live eggs have been employed to incubate various substances used in vaccines which have human or animal medicinal or diagnostic applications.

Examples of substances which have been proposed as viable treatment (or harvestable vaccine material) alternatives for delivery via *in ovo* injection of avian embryos include live culture vaccines, antibiotics, vitamins, and even competitive exclusion media (a live replicating organism). Specific examples of treatment substances are described in U.S. Pat. No. 4,458,630 to Sharma et al, and U.S. Pat. No. 5,028,421 to Fredericksen et al.

Conventionally, the physical injection has been typically targeted at preferred positions within the egg in order to administer the substance into specific developing regions of the embryo. See, for example, U.S. Patent No. 5,136,979 to Paul et al., which describes an injection apparatus for accurate and precise injection of eggs of varying sizes. As understood by those of skill in the art, as the incubation period progresses towards maturity (i.e., hatching), the embryo and its membranes, e.g., the air cell, the allantois, and yolk sac, correspondingly change in both volume and position within the egg shell. Additionally, the quantitative volume of the enclosed fluids vary as well; for example, the density of the allantois (fluid, solid) varies as a function of time over the incubation period.

Thus, selection of both the site and time of treatment can impact the effectiveness of the injected substance as well as the mortality rate of the treated embryos. *See e.g.*, U.S. Patent No. 4,458,630 to Sharma et al., U.S. Patent No. 4,681,063 to Hebrank, and U.S. Patent No. 5,158,038 to Sheeks et al.

### Summary of the Invention

The present invention, recognizes that there is a need to introduce multiple substances into a live egg with a minimum of trauma thereto, including substances which are effective treatment alternatives when separately injected but become biologically noxious when combined. Thus, a first object of the present invention is to provide a multi-site *in ovo* injection device for delivering a variety of treatment substances to avian embryos while minimizing the risk of injury thereto.

Additionally, the present invention recognizes that there is a need to withdraw multiple samples from a live egg with a minimum of trauma thereto, including withdrawing two samples from different compartments of, or locations in, the egg at the same time. Thus, a further object of the present invention is to provide a multi-site *in ovo* sampling device for withdrawing a variety of samples from avian embryos while minimizing the risk of injury thereto.

It is another object of the present invention to introduce, without mixing, biologically incompatible products *in ovo* to embryos.

It is a further object of the present invention to separately introduce without mixing at least two different treatment materials into different locations in the egg, through either a single or two separate delivery paths.

It is another object of the present invention to introduce at least two different treatment substances which are separately delivered by one or more of time and spatial separation into an opening in the egg shell.

These and other objects, advantages, and features are provided by a multi-site or multi-dosage injection or withdrawal methods and apparatus disclosed herein. The methods and apparatus of the invention deliver at least two different substances into predetermined areas within the egg, or withdraw samples from at least two different predetermined locations in the egg.

In particular, a first aspect of the present invention is a multi-injection method for treating avian embryos *in ovo.* In the method, an avian egg is oriented into a predetermined position and a small first opening is introduced into the shell of the avian egg. A delivery device which has either a single or a plurality of lumens therein is extended through the first opening and into the egg a predetermined depth. Predetermined dosages of a first substance and a second substance are separately released into the egg and the delivery device is retracted from the egg, thereby treating the avian embryo. Advantageously, a plurality of lumens can include separate needles that separately deliver the first and second substances to spatially separate areas, or different compartments, of the egg. In one embodiment, a first needle extends longitudinally a greater distance in the egg than a second needle; alternatively, one or more of the needles can include a side port to dispense the substance transversely spatially separated from the other substance. Alternatively, the needles can be adapted to withdraw a sample of material from the egg.

Another aspect of the present invention includes a multi-injection method for treating avian embryos *in ovo* that first orients an avian egg into a predetermined position and then introduces a small first opening into the shell of an avian egg. Additionally, a small second opening is introduced into the shell of the avian egg, the second opening being spaced apart from the first opening. Respective ones of the first and second delivery devices are extended through corresponding first and second openings and into the egg a predetermined depth. A predetermined dosage of a first substance and a second substance is released from respective ones of the first and second delivery devices into the egg. The delivery devices are retracted from the egg, thereby treating the avian embryo. Alternatively, the delivery devices can be adapted as sampling devices, to withdraw a sample of material from the egg.

Yet another aspect of the present invention includes a multi-injection method for treating avian embryos *in ovo* which orients an avian egg into a predetermined position and introduces a small first opening into the shell of an avian egg. A delivery device is extended through the first opening and into the egg a predetermined depth. Predetermined dosages of a first substance and a second substance are released into the egg and the delivery device is retracted from the egg, thereby treating the avian embryo. Advantageously, this method temporally combines the different substances to minimize degradation of the substances attributed to reactance therebetween. Thus, preferably, this method allows the first and second substances to be stored in separate chambers and temporally combines or mixes the first and second substances, either with an active mixing chamber, or by introducing them into a common delivery path, prior to delivery into the egg.

An additional aspect of the present invention is directed towards an automated *in ovo* injection apparatus. The apparatus comprises a fixture for holding a plurality of eggs in a substantially upright and aligned position. The fixture is configured to provide external access to predetermined areas of the eggs. The apparatus also includes a plurality of injection delivery devices configured to contact predetermined areas of the egg; at least one of the injection devices corresponds to each egg in the fixture. Each of the delivery devices comprises a first and second lumen that is adapted to be received into the egg. The apparatus further comprises a first treatment substance container for holding a first treatment substance. The first container is in fluid communication with each of the plurality of injection delivery devices. The apparatus also includes a second treatment substance container for holding a second treatment substance. The second container is in fluid communication with each of the plurality of injection devices. The first container and each of the plurality of injection devices defines a first fluid pathway therebetween. Similarly, the second container and each of the plurality of injection devices define a second fluid pathway therebetween. A pump is operably associated with the first and second containers and the injection units for delivering a predetermined dosage of each of the first and second treatment substances to each of the injection devices. Alternatively, the delivery devices can be adapted to withdraw a sample of material from the egg, where the samples are maintained in separate fluid pathways.

Advantageously, various alternative embodiments of the injection and sampling delivery devices allow for a multiplicity of convenient and useful configurations. For example, the double lumens can be concentrically configured to be telescopically extended at different positions into the egg. Alternatively, the first and second lumens can be provided by a plurality of needles of differing configurations, such as length, port position, and the like.

Another aspect of the present invention is also directed to an automated *in ovo* injection or sampling apparatus. The apparatus comprises a fixture for holding a plurality of eggs in an aligned position, such that the fixture is configured to provide external access to predetermined areas of the eggs. The apparatus includes a plurality of first injection delivery (or sampling) devices and a plurality of second injection delivery (or sampling) devices, each configured to contact predetermined areas of the egg, a respective one of each of the first and second injection delivery (or sampling) devices corresponding to one egg in the fixture. The device also includes first and second treatment substance containers for holding respective ones of first and second treatment substances (or first and second sample substance containers for holding respective ones of first and second samples withdrawn from the egg). The first container is in fluid communication with each of the first injection delivery devices and the second container is in fluid communication with each of the second injection delivery devices. Thus, the first container and each of the first delivery devices define a first fluid pathway therebetween and the second container and each of the second injection delivery devices define a second fluid pathway therebetween such that the first pathway is separate from the second pathway. A pump is operably associated with the first and second containers for delivering a predetermined dosage of each of the first and second treatment substances to each of the respective first and second injection devices. Similar to the apparatus above, this device can be alternatively configured to deliver different treatment substances to (or withdraw different samples from) different treatment sites within the egg.

Eggs treated by the method of the present invention are preferably incubated to hatch after the treatment substances are administered,

The foregoing and other objects and aspects of the present invention are explained in detail in the specification set forth below.

### Brief Description of the Drawings

**Figure 1** is a partial front view of a multi-site injection apparatus according to the present invention.

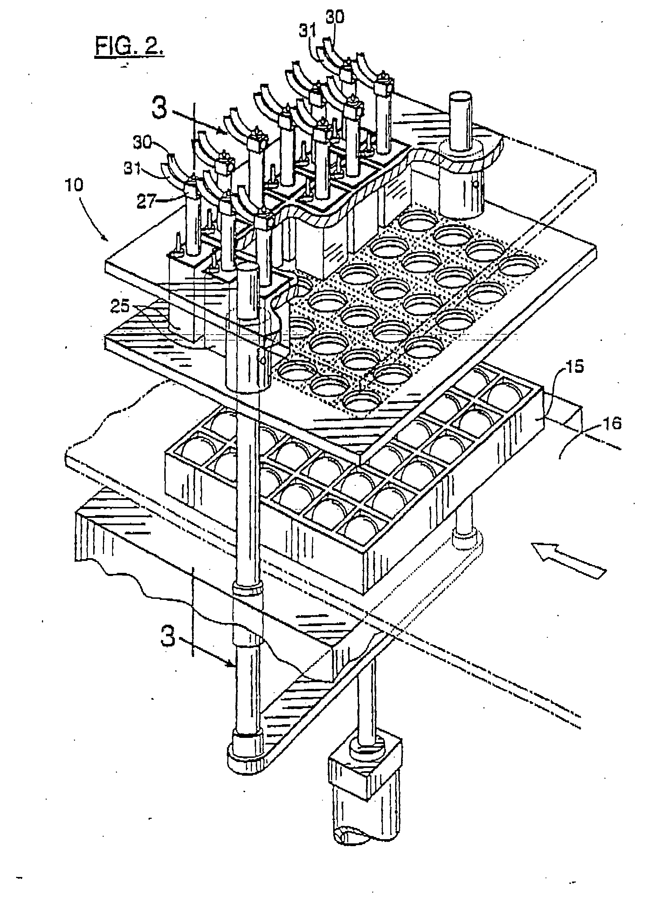

**Figure 2** is side perspective view of a multi-site injection apparatus shown in Figure 1.
**Figure 3** is an enlarged section view taken along line 3-3 in **Figure 2** illustrating one embodiment or a multi-site injection head according to the present invention.
**Figure 4** is an enlarged view of the injection head in Figure 3 with lumens shown downwardly extended and delivering substances into an egg, according to one embodiment of the present invention.
**Figure 5** is an enlarged sectional view of the lumens shown in Figure 4.
**Figure 6** is an end view taken along lines 6-6 in Figure **5.**
**Figure 7** is an enlarged partial sectional view of an alternative embodiment of a multi-site injection device via two separate needles according to the present invention.
**Figure 8** is an enlarged partial sectional view of another embodiment of a multi-site injection device via three separate needles.
**Figure 9** is an enlarged partial sectional view of another embodiment of a multi-site injection device via two joined needles.
**Figure 10** is an enlarged partial sectional view of dual injection head multi-site injection device and another embodiment of treatment delivery needles and associated delivery paths into an egg.
**Figure 11** is an enlarged partial sectional view of an alternative embodiment of a dual injection head multi-site injection device and further illustrating alternative substance delivery paths into an egg.
**Figure 12.** is a partial exploded view of a needle hub configured to be interchangeably and alignably assembled to the multi-site injection head.
**Figure 13** is a block diagram of an apparatus according to the present invention showing two separate treatment chambers, a separate cleaning solution chamber, and a controller, along with corresponding pumps and valves and separate injection paths; further, and optionally, the dotted lines illustrate the delivery of the separate treatment substances along a common delivery path.

### Detailed Description of the Preferred Embodiments

The present invention is practiced with eggs, particularly bird or avian eggs such as chicken, turkey, duck, geese, quail, pheasant, or ostrich eggs. The eggs are viable eggs; that is, eggs containing a live avian embryo. The eggs may be in any stage of embryonic development, including both early embryonic development and late embryonic development.

The present invention will now be described more fully hereinafter with reference to the accompanying drawings, in which a preferred embodiment of the invention is shown. This invention may, however, be embodied in many different forms and should not be construed as limited to the embodiments set forth herein. Rather, these embodiments are provided so that this disclosure will be thorough and complete and will fully convey the scope of the invention to those skilled in the art.

In the drawings, the thickness of layers and regions are exaggerated for clarity. Like numbers refer to like elements throughout.

In the description of the present invention that follows, certain terms are employed to refer to the positional relationship of certain structures relative to other structures. As used herein, the term "longitudinal" and derivatives thereof refer to the general direction defined by the longitudinal axis of the egg that extends upwardly and downwardly between opposing top and bottom ends of the egg. As used herein, the terms "outer", "outward", "lateral" and derivatives thereof refer to the direction defined by a vector originating at the longitudinal axis of the egg and extending horizontally and perpendicularly thereto. Conversely, the terms "inner", "inward", and derivatives thereof refer to the direction opposite that of the outward direction. Together the "inward" and "outward" directions comprise the "transverse" direction.

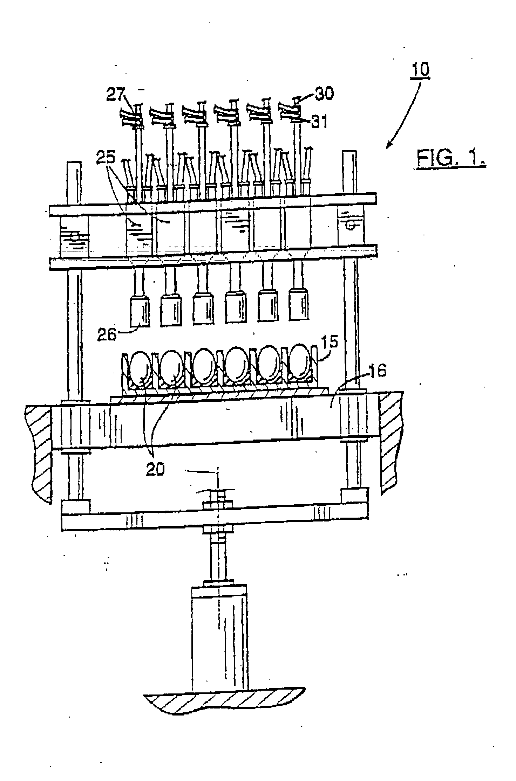

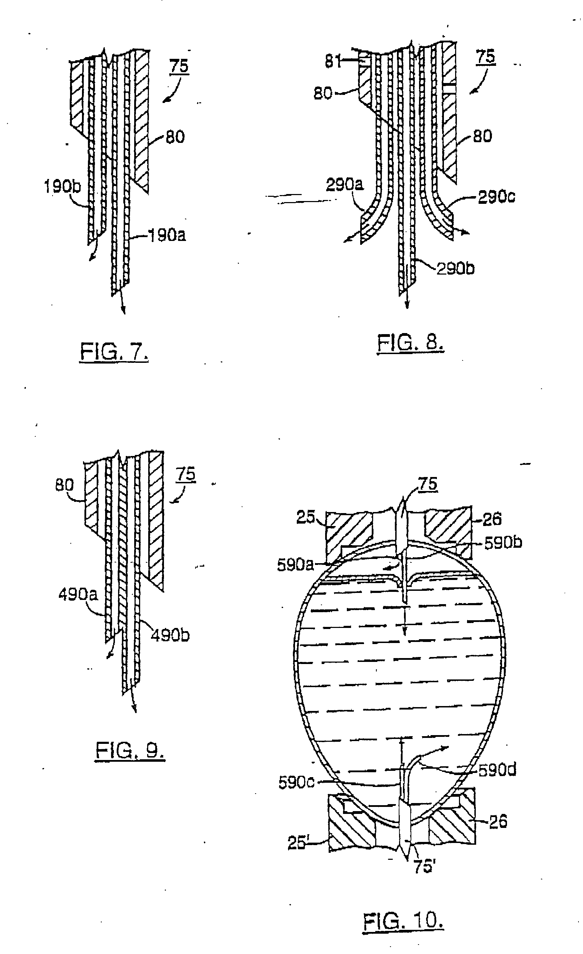

The present invention employs a single **(Figure 1)** or multiple head **(Figure 10)** injection device to introduce treatment substances into the egg such that the egg benefits from multiple treatment substances. As such the apparatus is preferably configured to automatically introduce (in one or more of a spatially and temporally separated sequence) multiple substances into a live egg with a minimum of trauma thereto. Advantageously, this apparatus can deliver substances that are effective treatment alternatives when separately injected but become less effective or biologically noxious when combined.

It will be apparent to one of ordinary skill in the art that the apparatus described herein for injection substances into eggs can be adapted to withdraw samples from avian eggs. Withdrawal of such samples may be required for any variety of reasons, such as to monitor the health of the embryo or assess the status of the egg. Withdrawing a fluid sample from avian eggs to determine gender of the avian embryo is described in PCT Application No. PCT/US97/18251 (published as WO 98/14781 on 9 April 1998, the disclosure of which is incorporated herein in its entirety). As used herein, an "injection delivery device", "delivery device" or "injection needle" encompasses the use of the devices for the withdrawal of samples from avian eggs. Similarly, the injection apparatus described herein may also be termed "sample withdrawal apparatus".

Referring now to the drawings, **Figure 1** illustrates one embodiment of an automated multi-site injection apparatus **10** according to the present invention. As shown, the apparatus **10** includes a flat **15,** a stationary base **16,** and a plurality of injection delivery devices **25** with fluid delivery means such as lumens or needle(s) **90** positioned therein The flat **15** holds a plurality of eggs **20** in a substantially upright and aligned position. The flat **15** is configured to provide external access to predetermined areas of the eggs **20.** The egg is held in by the flat **15** so that a respective one egg is in proper alignment relative to a corresponding one of the injection devices **25** as the injection device **25** advances towards the base **16** of the apparatus. As used herein, a "lumen" is a cavity or inner open space of a tube which can be provided by a syringe or needle. A lumen for delivery of a treatment substance may be within a needle, or between a needle and an outer guide or sleeve. Multiple lumens may be formed within a single needle, with the outlet ports positioned on different locations on the needle.

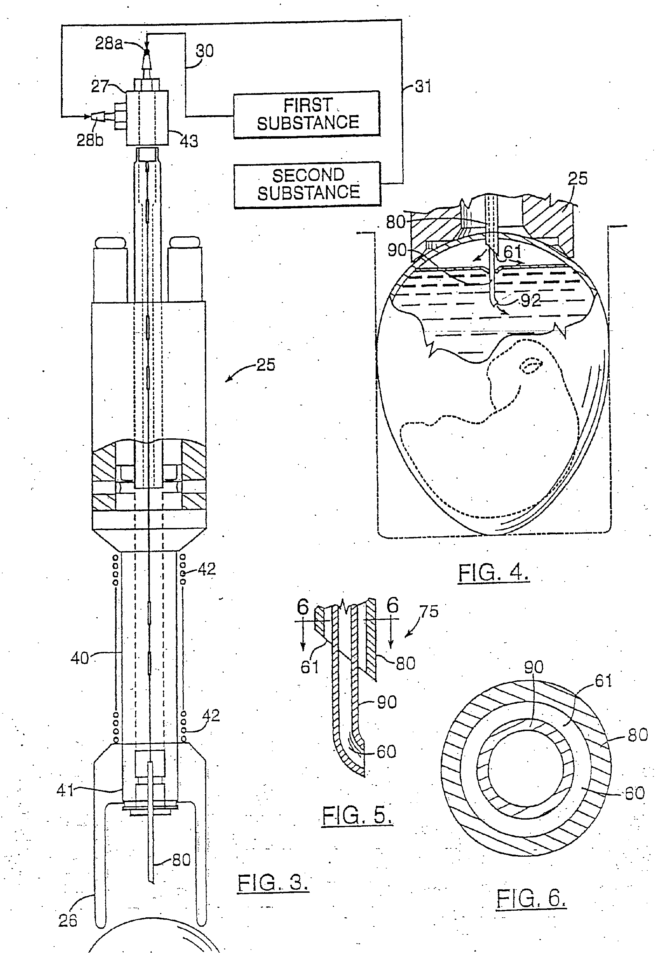

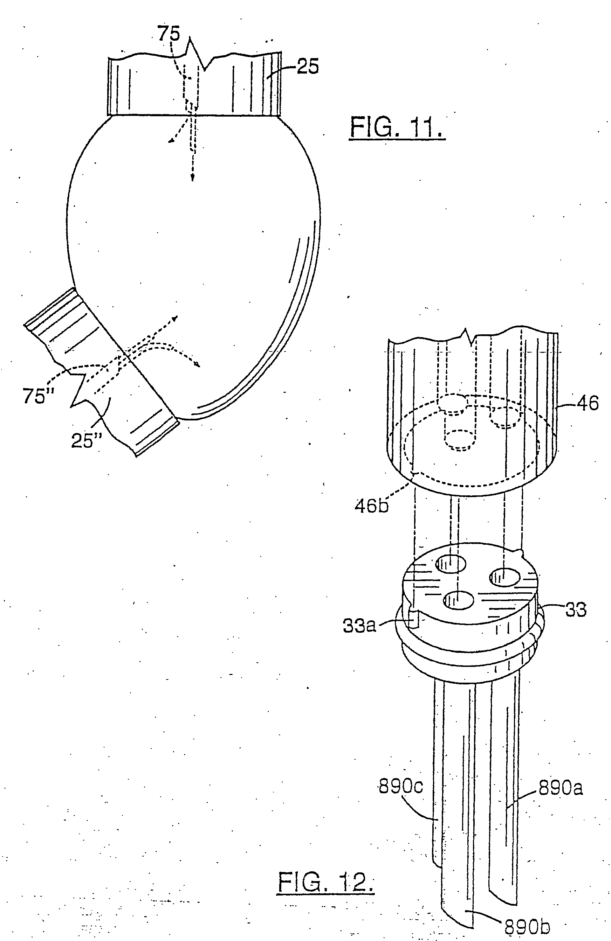

Each of the plurality of injection devices **25** have opposing first and second ends **26, 27.** The devices **25** have a first extended position and a second retracted position. As shown in **Figure 4,** upon extension of the injection device **25,** the first end **26** is configured to contact and rest against predetermined areas of the external egg shell. As shown in Figure 1, when not injecting, the injection devices **25** are retracted to rest a predetermined distance above the eggs and stationary base **16.** Alternatively, the base **16** can be longitudinally slidably moveable to position the eggs in proper position relative to the injection delivery device **25** (not shown). For ease of discussion, the description describes a unit with a single multi-site injection device **25** (shown as a top injection device) but the description also applies to an apparatus with multiple injection devices **25', 25"** (exemplarly shown in Figures **10** and **11),** or, alternatively, one or more of single bottom or side devices. For ease of illustration, **Figure 3** shows a single needle device, essentially the same as the device currently marketed by Embrex Inc., but with the fluid supply altered so that a second treatment substance rather than a disinfectant solution is channeled through the lumen between the needle and the outer guide. However, a dual needle device, such as is shown in **Figure 7,** is currently preferred so that the outer lumen remains available for a cleansing solution.

In an alternative embodiment of **Figure 3**, a single needle device may be employed, and suitable valves and controls used (not illustrated) so that a treatment solution passes through the outer lumen and is administered into the egg while the device is inserted into the egg, and a cleansing solution passes through the outer lumen and cleanses the needle while the device is withdrawn from the egg, and prior to insertion into the next egg for delivery.

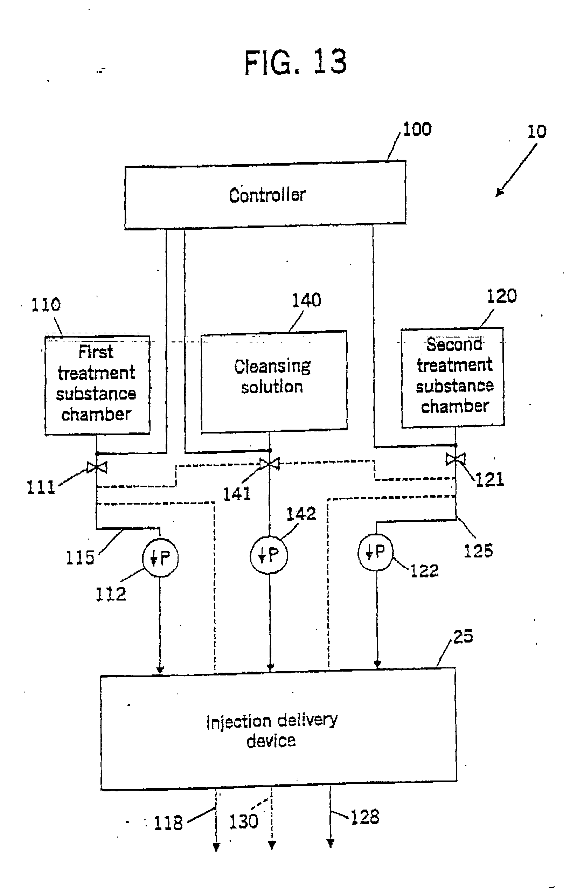

Preferably, as shown in **Figure 3**, the second end **27** of the injection delivery device includes first and second inlet ports **28a, 28b** which are configured to receive first and second tubing **30, 31** respectively. The first and second tubing are in fluid communication with first and second treatment substance chambers **110, 120 (Figure 13).** In order to maintain the separate delivery paths **60, 61** of the treatment substances through the injection device **25,** the injection devices **25** preferably include a first and second passage formed therein which are in fluid communication with the first and second inlet ports **28a, 28b,** respectively, as would be understood by one skilled in the art. In one embodiment of the present invention, as shown in **Figures 3 and 4,** the delivery paths **60, 61** are maintained separate from the other even when the lumens or needle(s) are injected into the egg. Alternatively, the delivery paths **60, 61** can merge immediately or a short time prior to delivery into the egg.

As shown in **Figure 3,** a multi-site *in ovo* injection head **25** for delivering compounds inside an egg comprises a body member **40** having opposing top **43** and bottom **41** end portions and an elongate longitudinal aperture formed therein; and a delivery device positioned in said aperture. The delivery device has at least two lumens formed therein (in the case where the lumen between the guide and the inner needle is used to carry compound to be introduced into the egg, the guide itself being considered a portion of the delivery device). In a preferred embodiment as illustrated in **Figure 7,** the drug delivery device comprises a first needle and a second needle, each of the needles containing one of said lumens. Also preferably, the first and second needles are configured to deliver substances through the lumens thereof to spatially separate locations within an egg to be injected. The device includes an egg locating member, or egg engaging member **26,** connected to the body member bottom end portion, which as illustrated is slidably connected to the body member and includes a spring **42** to both cushion the engagement, and hold the egg in place during the downstroke of the injection head. As illustrated, an outer guide **80** is provided to pierce the egg shell, and the needle **60** then extends beyond the outer guide and into the desired compartments of the egg (see **Figure 4).** The device illustrated in **Figure 3** is commercially available from Embrex Inc. in a single needle embodiment (where a chlorine cleansing solution only passes through the outer lumen), but not as a dual needle embodiment as illustrated in **Figure 7.**

The dual needle embodiment of **Figure 7** is currently preferred because the outer lumen **61** (see **Figures 5 and 6)** then remains available for a sanitizing or disinfecting solution. Where a dual needle embodiment is used, the inlet head **43** is modified to incorporate additional ports for introduction of additional compounds.

As shown by the block diagram in **Figure 13,** the apparatus **10** preferably includes a main controller **100,** first and second treatment substance chambers **110, 120,** associated valves **111, 121** and one or more drive means such as pumps **112, 122** operably associated with the substance chambers for delivering the appropriate amounts of treatment substances to the injection delivery device **25.** Although the apparatus **10** is illustrated as having a separate drive means for each fluid or treatment chamber **110, 120,** it will be appreciated by one of skill in the art that the invention is not limited thereto, Indeed, a single electric or pneumatic pump can be connected to each substance chamber to deliver each treatment substance to the inlet ports **30, 31** in the injection device. Preferably, the apparatus **10** incorporates one or more high speed peristaltic pumps or solenoid activated pumps, actuated to deliver precise dosages of treatment substances to the injection devices and ultimately to the egg. One such peristaltic pump is described in U.S. Patent Application 08/926,160 of Fenstermacher and Hall, filed 9 September 1997, the contents of which is incorporated herein as if recited in its entirety.

Optionally, as illustrated by the dotted line paths in **Figure 13**, the apparatus **10** can be configured to separately store the treatment substances in the respective chambers **110, 120** and then channel them through a single lumen for delivery into the egg. A valve, controlled by the controller, is required to alternately switch from one treatment fluid source to the other. Switching is timed with positioning of the needle so that different fluids are injected in different compartments within the egg. The different treatment substances can each be provided in liquid, solid, gas or aerosol form, or any other suitable form, so long as the substances are substantially separated from one another (e.g., liquid treatment substances separated by an intervening gas bubble) so that different treatment substances are placed in different compartments.

Also preferably, as also shown in **Figure 13,** the apparatus **10** includes a cleaning solution chamber **140** operably associated with the controller **100** and plumbed to be in fluid communication with each of the separate substance delivery channels **115, 125** upstream of the injection delivery device **25** as well as the one or more fluid or substance delivery paths **118, 128 (130)** in the injection device itself **25.** This will allow the delivery paths **118, 128 (130)** to be flushed with a decontamination fluid to maintain a preferred level of sterility in the apparatus so as to reduce the likelihood of cross-contamination between eggs or the growth of undesired contaminants in the delivery paths to help maintain the apparatus in optimum performance condition. Any conventional cleansing solution may be used, with chlorine cleansing solutions preferred.

In operation, in one embodiment of the present invention, a controller 100 directs the opening of the valves **111, 121** to release predetermined dosages of treatment substance into first and second tubes **30, 31.** The associated drive means or pumps **112, 122** forces the substances into delivery paths **115, 125** (such as through tubing **30, 31)** in fluid communication with each of the injection delivery devices **25** via inlet ports thereon **28a, 28b.**

In order to inject the shell with the desired treatment substances, as illustrated by **Figures 3 and 4,** the apparatus **10** preferably includes a shell piercing means such as an outer guide punch **80** which punctures at least one small opening into the outer shell of an egg, Alternatively, a high pressure water jet can also be employed. The outer guide punch **80** is preferably formed from a durable and rigid material, or the needle or injection device itself can serve as the shell piercing means. Advantageously, configuring the outer guide punch 80 to pierce the shell of the egg will help preserve the life of the needle(s) 90 as the needls(s) 90 can be inserted into the opening formed by the punch 80 and will not have to pierce the shell before entry into the egg.

Also, as shown in **Figure 4,** the outer guide punch **80** preferably does not advance into the inner shell membrane. The needle(s) can be formed of any suitable material such as but not limited to stainless steel or plastic. If formed of plastic, a compatible epoxy can be employed to assemble in position in the hub assembly **40.** The egg inserting ends of the needle(s) **90** are preferably sufficiently sharp to be able to pierce the inner shell membrane or chorioallantois with minimum tearing attributed thereto. Alternatively, blunt, dull, or side-port needles can be employed, particularly where it is desired that the needle avoid piercing a particular underlying membrane or the embryo proper.

In operation, the outer guide **80** preferably advances a predetermined short distance into the egg. The injection device **25** then extends the lumens or needle(s) **90** into the egg through the preformed opening. The needles **90** are configured to release (preferably simultaneously) a predetermined dosage of the substances into predetermined sites, such as above or below the air cell and into the amnion of the avian embryo (as will be discussed in more detail hereinbelow). The needle(s) **90** are then retracted into the outer guide punch **80** and the guide punch **80** is returned to the stationary storage position within the bottom portion of the injection device **26** and, as described above, the entire injection unit is then retracted and preferably flushed before the next flat of eggs are advanced. Preferably, the exterior surface of the needles and/or lumens are then flushed to disinfect or clean the injection device **25** such that remnants of the injected egg or other contaminants are flushed out of the delivery paths **60, 61** and the exterior portion of the needle tip(s) are sanitized. In a preferred embodiment, as illustrated in **Figure 8,** the outer guide punch **80** includes a plurality of apertures **81** formed therearound to allow the cleaning solution to flush the exterior surface as well as the interior lumens.

Turning back to **Figure 4,** the injection delivery device **25** is shown in a preferred position in the egg, *i.e.*, one lumen **61** delivering a first substance in the air cell and the other lumen **60** extending farther down to deliver a second substance below the chorioallantois membrane. As shown in **Figure 5,** the outer guide punch **80** defines the second delivery path **61** (one lumen) and a needle **90** held with the inner diameter of the guide punch **80** defines the first delivery path **60** (a second lumen). The needle **90** may include a curved end **92** to direct the substance in a predetermined direction when released into the egg. This configuration can provide further separation of treatment materials when released within the egg. **Figure 6** illustrates the separate delivery paths (exemplarly shown as concentric lumens) of the materials within the injection head **75.**

**Figures 7 to 12** illustrate alternative configurations of an injection head **75** that provide alternative substance delivery paths into the egg, In a particularly preferred embodiment, **Figure 7** shows two separately extending needles **190a, 190b,** one extendable a predetermined further length than the other. The outer guide punch **80** can provide a separate lumen or delivery path, but is preferably used to provide an outlet for a sanitizing fluid or cleansing fluid. For a third treatment substance, as noted above, **Figure 8** illustrates three needles, a central needle **290b** and two side needles **290a, 290c.** As illustrated, the central needle **290b** extends a further distance than the side needles **290a, 290c.** The side needles **290a, 290c** may be curved to direct the treatment substances away from the central needle **290b** and the other opposing side needle. Alternatively, one or more of the needles can be a side port needle which can direct the substance in an angular trajectory path relative to the longitudinal extension of the needle.

**Figure 9** illustrates two needles **490a, 490b** structurally joined a major distance of the length of the needles. Alternatively, a single needle or device with multiple lumens could be used. **Figure 10** shows a top and bottom multi-site injection delivery device **75, 75'** each having alternatively configured needles **590a, 590b, 590c, 590d** for directing the substance in a desired area of the developing egg. Similarly, **Figure 11** illustrates a side and top multi-site injection delivery device **75, 75".** Note that where two (or more) holes are made in the egg shell, particularly in a configuration that would cause the contents of the shell to drain from the egg, then at least one of the holes (preferably the lower hole) should be sealed, in accordance with known techniques, to prevent draining of the egg.

Alternatively, an injection delivery device may have a needle with two lumens that terminate into a single lumen at a position prior to the end of the needle. This configuration keeps the substances separate a major portion of the substance delivery path but allows them to mix at the site of injection.

The apparatus of the instant invention can also employ a side or bottom injection device **25', 25".** One or more of these alternative injection devices can be used concurrently with a top injecting device or subsequent or prior in time. Of course the flat must be altered to provide access to the appropriate part of the egg shell. When injecting from the bottom, it is preferred to position the bottom injection device opposing the top injection device and further preferred to configure the injection head **75** and depth of injection to inject into the yolk sac. Note that when injecting into the yolk sac a small needle such as a **25** gauge needle is preferred in order to reduce the risk of yolk sac leaks. When injecting from the side it is preferred that the needles be inserted at an angle below 90E which respect to a plane normal to the longitudinal axis of the egg. As shown in **Figure 11,** it is more preferred that the side injection head **75"** be positioned and configured to enter the egg at about 45 degrees or less relative to the longitudinal axis of the egg.

**Figure 12** illustrates an interchangeable needle hub **33** having a plurality of needles **890a, 890b, 890c.** The needle hub **33** is provided with an alignment tab **33a** that is configured to matingly engage a complimentary-shaped detent **46b** in the illustrated injection head **46.** Accordingly, the needle hub **33** can be alignably assembled to the injection head **46.**

In two preferred embodiments as illustrated in **Figures 7 and 8,** the injection head **75** includes a 16 gauge outer guide punch 80 which surrounds two or three 25 gauge needles therein.

Treatment substances may administered as a bolus in the same or different physical form, such as a liquid, gas, solid (e.g. a powder or a unitary erodable time-release matrix), aerosol or spray, etc.

The bolus of treatment substance may be administered into any suitable compartment of the egg, including intraperitioneally, intramuscularly, or subcutaneously within the embryo, into the yolk sac or stalk, into the liver or lungs of the embryo, into the air cell, the allantoic sac, or the amniotic fluid, etc. In some cases it may be desirable to administer two different substances into different locations within the same compartment (e.g., intraperitoneal or intramuscularly, or even into the amniotic fluid for rapidly absorbed but otherwise incompatible treatment substances). In addition, it may be desirable in some cases for the first and second treatment substances to be the same, but simply administered in different locations within the egg.

Treatment substances that may be administered include, but are not limited to vaccines, hormones, growth-promoting agents, etc.

In one preferred embodiment, one of the treatment substances is Newcastle's disease vaccine, and the other treatment substance is Marek's disease vaccine. Marek's disease vaccine is preferably administered into the region defined by the amnion; Newcastle's disease vaccine is preferably administered into the air cell.

In another preferred embodiment, one of the treatment substances is a biologically active substance such as a vaccine, antibiotic, hormone, probiological culture (e.g., a competitive exclusion media), and the other is a marker such as a dye. The marker can serve as a positive control to confirm injection, for example in the case of eggs subsequently found to be nonviable.

Although a few exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention as defined in the claims. The invention is defined by the following claims.

## Claims

1. A multi-injection method for treating avian embryos in ovo, comprising the steps of:
orienting an avian egg into a predetermined position;
introducing a small first opening into the shell of said egg;
extending a delivery device through the first opening and into the egg a predetermined depth; **characterised by**:
releasing predetermined dosages of a first substance and a second substance into the egg in separate locations therein; and
retracting the delivery device from said egg, thereby treating said avian embryo.

2. A method according to claim 1, wherein the delivery device includes first and second delivery needles, and wherein the first delivery needle extends longitudinally farther into said egg than the second drug delivery needle.

3. A method according to Claim 1, wherein the first and second substances are released in different compartments of said egg.

4. A method according to Claim 1, further comprising the steps of introducing a second opening into the egg shell separate from the first opening and extending a second delivery device therethrough.

5. A method according to Claim 4, wherein at least one substance is introduced via the first delivery device above the air cell and another substance is introduced via the second delivery device into the yolk sac, allantois, amnion or embryo.

6. A method according to claim 1, wherein said delivery device has a first lumen formed therein, and said first and second substances are both delivered through a said first lumen.

7. A method according to Claim 1, wherein the opening is introduced by piercing the shell with a guide.

8. A method according to Claim 1, further comprising the step of flushing the delivery device with a cleansing solution after delivery of the first and second substances into the egg.

9. A method according to Claim 1, wherein the first and second substances are delivered into the egg substantially simultaneously in time.

10. A method according to Claim 1, wherein the first and second substances are delivered into the egg sequentially in time.

11. A multi-injection method for treating avian embryos in ovo, comprising the steps of:
orienting an avian egg into a predetermined position;
introducing a small first opening into the shell of an avian egg;
introducing a small second opening into the shell of an avian egg, the second opening being spaced apart from the first opening; **characterised by**:
extending a first delivery device through said first opening into the egg a predetermined depth and to a first location within said egg, wherein the first delivery device comprises an outer guide member and a needle slidably disposed therein;
extending a second delivery device through said second opening into the egg a predetermined depth and to a second location within said egg different from said first location, wherein the second delivery device comprises an outer guide member and a needle slidably disposed therein;
releasing a predetermined dosage of a first substance from said first delivery device into said egg;
releasing a predetermined dosage of a second substance from said second delivery device into said egg; and
retracting the first and second delivery devices from said egg, thereby treating the avian embryo.

12. A method according to Claim 11, wherein the first delivery device comprises an outer guide member and a plurality of needles enclosed therein, said method further comprising the step of downwardly extending the needles thereby puncturing the membrane of the egg before releasing the first treatment substance thereto.

13. A method according to Claim 12, wherein the second delivery device is upwardly extended to release the second treatment substance within or adjacent the albumen, the yolk sac, embryo, allantois, or amnion.

14. A method according to Claim 13, wherein the first and second substances are released substantially simultaneously in time.

15. An automated in ovo injection apparatus, comprising:
a flat (15) for holding a plurality of eggs in a substantially upright and aligned position, wherein said flat is configured to provide external access to predetermined areas of the eggs;
a first treatment substance container (110) for holding a first treatment substance, said first container in fluid communication with each of said first lumens;
a second treatment substance container (120) for holding a second treatment substance, said second container in fluid communication with each of said second lumens;
at least one pump (112, 122) operably associated with said first and second containers and said injection devices and configured for delivering a predetermined dosage of each of said first and second treatment substances to each of said injection devices, **characterised by**:
a plurality of injection delivery devices (25) configured to contact predetermined areas of said egg, at least one of said injection devices corresponding to each egg in said flat, each of said delivery devices including first and second lumens adapted to be received into said egg, and to deliver respective first and second treatment substances from said first and second containers into different locations of said egg.

16. An automated injection apparatus according to Claim 15, wherein said first and second lumens are defined by first and second needles concentrically disposed with respect to each other.

17. An automated injection apparatus according to Claim 16, wherein one of said first and second needles is telescopically extendable a further distance than the other.

18. An automated injection apparatus according to Claim 15, wherein said first and second lumens are defined by first and second needles adjacently disposed with respect to each other and wherein said second needle is longitudinally extendable a further distance relative to said first needle.

19. An automated injection apparatus according to Claim 18, wherein said first needle includes a side port therein.

20. An automated injection apparatus according to Claim 15, wherein each of said injection delivery devices further comprise:
an outer guide punch having opposing first and second ends and defining a cylindrical passage therebetween;
a plurality of needles contained within said outer guide passage and extendable in a longitudinal direction from said outer guide first end, said needles having a retracted position and an extended position, wherein in said retracted position said needles are contained within the second end of said outer guide, and in said extended position at least one of said plurality of needles extends beyond said outer guide second end.

21. An automated injection apparatus according to Claim 20, wherein said plurality of needles includes a first and second needle positioned within said outer guide, and wherein said first needle is longitudinally extendable a greater distance into said egg relative to said second needle.

22. An automated injection apparatus according to Claim 21, wherein said second needle has a side port opening.

23. An automated injection apparatus according to Claim 20, wherein said outer guide includes a plurality of apertures thereon, thereby allowing cleaning substances to be flushed therethrough.

24. An automated injection apparatus according to Claim 15, wherein said injection devices are configured to deliver first and second treatment substances via at least one of spatially and temporally sequentially separated injections into said eggs in said flat.

25. An automated injection apparatus according to Claim 15, wherein said first and second lumens have proximate and distal ends and each of said lumens terminates to form a single lumen at the distal ends thereof, thereby temporally mixing first and second substances at the site of injection.

26. An automated injection apparatus according to Claim 15, wherein said at least one injection device corresponding to each egg includes first and second injection devices corresponding to each egg in said flat.

27. An automated injection apparatus according to Claim 26, wherein said first injection device is configured to inject the top large end of the egg and the second injection device is configured to inject into a separate opening spaced apart from said first injection device.

28. An automated injection apparatus according to Claim 27, wherein said first injection device includes a plurality of needles, each of which are extendable a predetermined distance into said egg.

29. An automated injection apparatus according to Claim 28, wherein a first needle of said at least one of said needles is extendable to a depth which is below the air cell of the egg.

30. An automated injection apparatus according to Claim 28, wherein a second needle different from said first needle is extendable a shorter depth than said first needle so as to terminate penetration into the egg above the air cell of the egg.

31. An automated in ovo injection apparatus, comprising:
a flat (15) for holding a plurality of eggs (20) in an aligned position, wherein said flat is configured to provide external access to predetermined areas of the eggs;
a plurality of first injection delivery devices (25) configured to contact predetermined areas of said egg, one of said first injection delivery devices corresponding to each egg in said flat, and wherein each of the first delivery devices (25) is configured to introduce a respective small first opening in a respective egg;
a plurality of second injection delivery devices configured to contact predetermined areas of said egg, one of said second injection delivery devices corresponding to each egg in said flat, and wherein each of the second delivery devices is configured to introduce a respective small second opening separate from a first opening in a respective egg;
a first treatment substance container (110) for holding a first treatment substance, said first container in fluid communication with each of said first injection delivery devices;
a second treatment substance container (120) for holding a second treatment substance, said second container in fluid communication with each of said second injection delivery devices;
a drive means (112, 122) operably associated with said first and second containers for delivering a predetermined dosage of each of said first and second treatment substances to each of the respective first and second injection devices; **characterised by**:
wherein said first container and each of said first delivery devices define a first fluid pathway (115) therebetween and said second container and each of said second injection delivery devices define a second fluid pathway (125) therebetween, wherein said first pathway is separate from said second pathway.

32. An automated injection apparatus according to Claim 31, said first container and each of said first delivery devices define a first fluid pathway therebetween and said second container and each of said second injection delivery devices define a second fluid pathway therebetween, wherein said first pathway is separate from said second pathway.

33. An automated injection apparatus according to Claim 31, wherein each of said first injection devices includes a plurality of needles, and wherein each of said needles is extendable to a different predetermined location into said egg.

34. An automated injection apparatus according to Claim 33, wherein at least one of said needles is extendable to a depth which is below the air cell of the egg.

35. An automated injection apparatus according to Claim 31, wherein said first injection device is configured to deliver a first substance at a first location below the air cell of the egg and said second injection device is configured to deliver a second substance at a second location in the egg.

36. An automated injection apparatus according to Claim 31, further comprising a third treatment container for holding a third treatment substance, said third treatment communication with one of said first and second injection devices.

37. An automated injection apparatus according to Claim 36, wherein said first injection device is configured to deliver said first and third substances.

38. An automated in ovo injection apparatus, comprising:
a flat (15) for holding a plurality of eggs (20) in an aligned position, wherein said flat is configured to provide external access to predetermined areas of the eggs;
a plurality of injection delivery devices(25), at least one of said injection delivery devices corresponding to each egg in said flat, each of said devices having opposing first and second end portions (26, 27), said second end portion having an end port (80) configured to contact and penetrate into a predetermined location in said egg;
a first treatment substance container (110) for holding a first treatment substance, said first container in fluid communication with each of said injection delivery devices;
a second treatment substance container (120) for holding a second treatment substance, said second container in fluid communication with each of said injection delivery devices;
a pump (112, 122) operably associated with said first and second containers for delivering a predetermined dosage of each of said first and second treatment substances to each of said injection devices, wherein the predetermined dosages of the first and second treatment substances are combined prior to said end port to be delivered to the egg together at the site of injection, **characterised by**:
a third container (140) for holding a cleansing liquid, said third container in fluid communication with said pump, said first container, and each of said injection devices, thereby allowing said fluid pathways to be flushed with said cleansing fluid.

39. An automated injection apparatus according to Claim 38, further comprising a mixing chamber in fluid communication with said first and second containers and said injection devices, said mixing chamber positioned intermediate of said containers and said injection devices, thereby temporally combining the first and second substances prior to injection and delivering the predetermined dosage as a mixed substance along a single fluid pathway into each of said injection devices.

40. An automated injection apparatus according to Claim 38, said first container and each of said injection devices define a first fluid pathway therebetween and said second container and each of said injection devices define a second fluid pathway therebetween, wherein said first and second pathways are separate but are configured to terminate to a common pathway at the first end of said injection device at the site of injection.

41. An automated injection apparatus according to Claim 39, further comprising a third container for holding a cleansing liquid, said third container in fluid communication with said pump, said first container, and each of said injection devices, thereby allowing said fluid pathways to be flushed with said cleansing liquid.

42. A method for treating avian embryos in ovo, comprising the steps of:
orientating an avian egg into a predetermined position; introducing a small first opening into the shell of said egg;
extending a delivery device through the first opening and into the egg a predetermined depth;
releasing a predetermined dosage of a substance into a first location of the egg;
removing a sample from a separate second location of the egg; and
retracting the delivery device from said egg, thereby treating said avian embryo.

43. A method according to Claim 42, wherein the delivery device includes first and second needles, and wherein the first needle extends longitudinally farther into said egg than the second needle.

44. A method according to Claim 42, wherein the first and second locations are different compartments of said egg.

45. A method according to Claim 42, further comprising the steps of:
introducing a second opening into the egg shell separate from the first opening and extending a second delivery device therethrough; and
releasing a predetermined dosage of a second substance into a third location of the egg and removing a sample from a separate fourth location of the egg.

46. A method according to Claim 45, wherein at least one substance is introduced via the first delivery device above the air cell and another substance is introduced via the second delivery device into the yolk sac, allantois, amnion or embryo.

47. A method according to Claim 42, wherein said delivery device has a first lumen formed therein, wherein said substance is delivered through said first lumen, and wherein said sample is removed through said first lumen.

48. A method according to Claim 42, wherein the opening is introduced by piercing the shell with a guide.

49. A method according to Claim 42, further comprising the step of flushing the delivery device with a cleansing solution after delivery of the substance into the egg and after removal of the sample from the egg.

50. A method according to Claim 42, wherein delivery of the substance and removal of the sample occurs substantially simultaneously in time.

51. A method according to Claim 42, wherein delivery of the substance and removal of the sample occurs sequentially in time.

52. A method according to Claim 42 wherein said sample is a liquid sample.

53. A method for removing samples from avian embryos in ovo, comprising the steps of:
orienting an avian egg into a predetermined position;
introducing a small first opening into the shell of said egg;
extending a sample removal device through the first opening and into the egg a predetermined depth;
removing first and second samples from the egg in respective first and second separate locations therein; and
retracting the sample removal device from said egg.

54. A method according to Claim 53, wherein the sample removal device includes first and second needles, and wherein the first needle extends longitudinally farther into said egg than the second needle.

55. A method according to Claim 53, wherein the first and second samples are removed from different compartments of said egg.

56. A method according to Claim 53, further comprising the steps of introducing a second opening into the egg shell separate from the first opening and extending a second sample removal device therethrough.

57. A method according to Claim 56, wherein at least one sample is removed via the first sample removal device above the air cell and another substance is introduced via the second sample removal device from the yolk sac, allantois, amnion or embryo.

58. A method according to Claim 53, wherein said sample removal device has a first lumen formed therein, and said first and second samples are both removed through said first lumen.

59. A method according to Claim 53, wherein the opening is introduced by piercing the shell with a guide.

60. A method according to Claim 53, further comprising the step of flushing the sample removal device with a cleansing solution after removal of the first and second samples from the egg.

61. A method according to Claim 53, wherein the first and second samples are removed from the egg substantially simultaneously in time.

62. A method according to Claim 53, wherein the first and second samples are removed from the egg sequentially in time.

63. A method for treating avian embryos in ovo, comprising the steps of:
orientating an avian egg into a predetermined position; introducing a small first opening in the shell of an avian egg;
introducing a small second opening into the shell of an avian egg, the second opening being spaced apart from the first opening;
extending a delivery device through said first opening into the egg a predetermined depth and to a first location within said egg;
extending a sample removal device through said second opening into the egg a predetermined depth and to a second location within said egg different from said first location;
releasing a predetermined dosage of a substance from said delivery device into said egg;
removing a sample from said egg second location via said sample removal device; and
retracting the delivery device and sample removal device from said egg, thereby treating the avian embryo.

64. A method according to Claim 63, wherein the delivery device comprises an outer guide member and a plurality of needles enclosed therein, said method further comprising the step of downwardly extending the needles thereby puncturing the membrane of the egg before releasing the substance thereto.

65. A method according to Claim 64, wherein the sample removal device is upwardly extended to remove said sample from within or adjacent the albumen, the yolk sack, embryo, allantois, or amnion.

66. A method according to Claim 65, wherein delivery of the substance and removal of the sample occurs substantially simultaneously in time.

67. A method according to Claim 65, wherein delivery of the substance and removal of the sample occurs sequentially in time.

68. A method for removing samples from avian embryos in ovo, comprising the steps of:
orienting an avian egg into a predetermined position;
introducing a small first opening into the shell of an avian egg;
introducing a small second opening into the shell of an avian egg, the second opening being spaced apart from the first opening;
extending a first removal device through said first opening into the egg a predetermined depth and to a first location within said egg;
extending a second removal device through said second opening into the egg a predetermined depth and to a second location within said egg different from said first location;
removing a first sample from said first location;
removing a second sample from said second location; and
retracting the first and second sample removal devices from said egg.

69. A method according to Claim 68, wherein the first removal device comprises an outer guide member and a plurality of needles enclosed therein, said method further comprising the step of downwardly extending the needles thereby puncturing the membrane of the egg before removing the first sample therefrom.

70. A method according to Claim 69, wherein the second removal device is upwardly extended to remove the second sample from within or adjacent the albumen, the yolk sac, embryo, allantois, or amnion.

71. A method according to Claim 70, wherein the first and second samples are removed substantially simultaneously in time.

72. A method according to Claim 70, wherein the first and second samples are removed sequentially in time.

73. An automated in ovo injection apparatus, comprising:
a flat for holding a plurality of eggs in a substantially upright and aligned position, wherein said flat is configured to provide external access to predetermined areas of the eggs;
a plurality of injection delivery devices configured to contact predetermined areas of said egg, at least one of said injection devices corresponding to each egg in said flat, each of said delivery devices including first and second lumens adapted to be received into said egg;
a first container for holding a treatment substance, said first container in fluid communication with each of said first lumens;
a second container for receiving a sample from each egg, said second container in fluid communication with each of said second lumens;
at lease one pump operably associated with said first and second containers and said injection devices and configured for delivering a predetermined dosage of said treatment substance to each of said first lumens and for removing a sample from each egg via each of the second lumens.

74. An automated injection apparatus according to Claim 73, wherein said first and second lumens are defined by first and second needles concentrically disposed with respect to each other.

75. An automated injection apparatus according to Claim 74, wherein one of said first and second needles is telescopically extendable a further distance than the other.

76. An automated injection apparatus according to Claim 73, wherein said first and second lumens are defined by first and second needles adjacently disposed with respect to each other and wherein one of said first and second needles is longitudinally extendable a further distance relative to the other.

77. An automated injection apparatus according to Claim 73, wherein each of said injection delivery devices further comprise:
an outer guide punch having opposing first and second ends and defining a cylindrical passage therebetween;
a plurality of needles contained within said outer guide passage and extendable in a longitudinal direction from said outer guide first end, said needles having a retracted position and an extended position, wherein in said retracted position said needles are contained within the second end of said outer guide, and in said extended position at least one of said plurality of needles extends beyond said outer guide second end.

78. An automated injection apparatus according to Claim 77, wherein said plurality of needles includes a first and second needle positioned within said outer guide, and wherein said first needle is longitudinally extendable a greater distance into said egg relative to said second needle.

79. An automated injection apparatus according to Claim 77, wherein said outer guide includes a plurality of apertures thereon, thereby allowing cleaning substances to be flushed therethrough.

80. An automated injection apparatus according to Claim 73, wherein said at least one injection device corresponding to each egg includes first and second injection devices corresponding to each egg in said flat.

81. An automated injection apparatus according to Claim 80, wherein said first injection device is configured to inject the top large end of the egg and the second injection device is configured to inject into a separate opening spaced apart from said first injection device.
